(19) Europäisches Patentamt
European Patent Office
Office européen des brevets

(11) **EP 4 114 097 B1**

(12) **FASCICULE DE BREVET EUROPEEN**

(45) Date de publication et mention de la délivrance du brevet:
**09.10.2024 Bulletin 2024/41**

(21) Numéro de dépôt: **22181040.1**

(22) Date de dépôt: **24.06.2022**

(51) Classification Internationale des Brevets (IPC):
*H04W 52/22* *(2009.01)* *H04W 52/24* *(2009.01)*
*H04W 52/36* *(2009.01)* *H04W 4/80* *(2018.01)*
*H04W 4/02* *(2018.01)* *H04W 52/28* *(2009.01)*

(52) Classification Coopérative des Brevets (CPC):
**H04W 4/023; H04W 4/80; H04W 52/228;**
**H04W 52/245; H04W 52/246; H04W 52/283;**
**H04W 52/367**

(54) **DÉTECTION D OBJETS COMMUNICANTS POUR INTERACTIONS DE PROXIMITÉ**

ERKENNUNG VON KOMMUNIZIERENDEN OBJEKTEN FÜR INTERAKTIONEN IM NAHBEREICH

DETECTION OF COMMUNICATING OBJECTS FOR LOCAL INTERACTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2021 FR 2107047**

(43) Date de publication de la demande:
**04.01.2023 Bulletin 2023/01**

(73) Titulaire: **Orange**
**92130 Issy-les-Moulineaux (FR)**

(72) Inventeurs:
• **SURBAYROLE, Philippe**
**92326 CHÂTILLON CEDEX (FR)**

• **KOUNTOURIS, Apostolos**
**92326 CHÂTILLON CEDEX (FR)**

(74) Mandataire: **Plasseraud IP**
**104 Rue de Richelieu**
**CS92104**
**75080 Paris Cedex 02 (FR)**

(56) Documents cités:
**EP-A1- 3 499 643 EP-A1- 3 567 739**
**EP-A1- 3 860 230 WO-A1-2015/119655**
**US-A1- 2021 176 759**

## Description

### Domaine technique

La présente divulgation relève du domaine des communications par radiofréquence entre objets communicants et plus particulièrement de la détection d'objets communicants dans le cadre d'interactions de proximité.

### Technique antérieure

De nombreuses applications s'appuient sur des protocoles de détection entre plusieurs équipements, périphériques ou objets communicants. Par exemple, dans le secteur commercial, des applications de paiement sans contact ou d'envoi d'un reçu sous forme numérique à un terminal mobile d'un client suite à un passage en caisse consistent en une interaction entre aux moins deux équipements communicants via une communication sans fil. Dans le contexte de la gestion de pandémies, des applications mobiles peuvent consister à maintenir une distance minimale de sécurité entre les individus en envoyant par exemple des messages d'alerte aux terminaux mobiles d'individus détectés comme étant en deçà de la distance minimale de sécurité. En particulier, de telles applications sont souvent caractérisées par un besoin de détecter une proximité physique entre les équipements. Une telle détection de proximité physique peut correspondre à une distance (maximale ou minimale) tolérée entre les équipements de l'ordre du centimètre, comme c'est le cas pour la communication à portée proche (en anglais « *Near Field Communication* » ou NFD), ou de plusieurs mètres dans le cas d'une communication par Bluetooth par exemple.

De nombreux protocoles de communication requièrent alors l'estimation d'une distance entre deux équipements communicants, de sorte à établir une interaction sélective avec un équipement ou un groupe d'équipements spécifique. Par exemple, l'envoi d'un reçu de paiement par une borne de péage (ou par une caisse automatique) vise à envoyer le reçu uniquement au conducteur (ou au client) situé face à la borne dans la file de péage (ou de caisse) concernée et non à un conducteur (ou à un client) situé dans une file différente. Un autre exemple peut consister à débiter le montant d'un titre de transport lorsqu'un passager monte dans un bus à un arrêt et traverse une zone spécifique comprenant une borne de paiement (à l'avant du bus par exemple) : une telle application de paiement vise alors à détecter et débiter les passagers montant dans le bus et non un piéton marchant sur la chaussée à proximité de l'arrêt du bus. De telles applications d'interaction requièrent ainsi la détection par un premier équipement communicant (par exemple une borne de paiement) d'au moins un second équipement communicant (par exemple un terminal mobile d'un passager ou d'un client) dans une zone géographique de proximité délimitée par une distance prédéfinie.

Cependant, la détection de proximité et l'estimation de distance entre objets communicants dans les protocoles de communication existants sont souvent imprécises. En effet, de tels protocoles peuvent par exemple consister en un objet récepteur (comme un terminal mobile) recevant des signaux radiofréquence à des puissances reçues en provenance d'objets émetteurs (comme des *beacons).* Sur la base de telles puissances reçues (en utilisant l'intensité du signal reçu ou en anglais « *Received Signal Strength Indication* » ou RSSI), l'objet récepteur estime alors des distances respectives avec chaque objet émetteur. Une telle estimation de distance peut être biaisée par l'atténuation des signaux radiofréquence lors de leur propagation. Les puissances reçues par l'objet récepteur ne reflètent alors pas les distances réelles avec les objets émetteurs. De plus, une telle estimation de la distance à partir de la puissance reçue repose souvent sur une hypothèse de propagation en ligne de visée ou en visibilité directe (en anglais « *Line-of-Sight propagation* » ou LoS) des signaux, qui n'est pas toujours valide. Ainsi, l'orientation et la position des objets communicants émetteurs et récepteurs les uns par rapport aux autres ou encore la présence d'obstacles physiques (comme un mur ou une carrosserie métallique d'un véhicule par exemple) entre les objets communicants émetteurs et récepteurs peuvent réfléchir les ondes radios et fausser l'estimation de la distance par l'objet récepteur. Le document WO2015119655 montre un contrôle de puissance de transmission.

### Résumé

La présente divulgation vient ainsi améliorer la situation.

Il est proposé un procédé mis en oeuvre par un premier équipement, d'établissement d'une communication radiofréquence avec au moins un second équipement, le procédé comprenant :

a) une émission d'un premier message à une première puissance d'émission, ladite première puissance d'émission étant supérieure à une puissance minimale d'émission cible,

b) une réception d'au moins un second message en provenance au moins du second équipement, ledit second message comprenant une donnée relative à une deuxième puissance d'émission du second équipement,

c) une émission d'un troisième message à une troisième puissance d'émission à destination du second équipement, ladite troisième puissance d'émission étant déterminée sur la base de la deuxième puissance d'émission.

Par conséquent, le procédé permet à un équipement, notamment à un objet communicant connecté, d'initier une interaction de proximité en détectant d'autres équipements dans une zone prédéfinie et en adéquation avec l'interaction mise en oeuvre. En effet, de nombreuses applications d'interactions entre équipements reposent sur des critères géographiques, comme une distance minimale et/ou maximale requise entre les équipements concernés. De telles applications, dite de proximité, peuvent par exemple comprendre des opérations de paiement sans contact, d'envoi d'informations ciblant un ensemble d'individus limités dans un périmètre géographique précis ou encore de permettre un accès sélectif à des individus détectés à des distances précises.

L'émission du premier message à une première puissance d'émission supérieure à la puissance minimale d'émission cible permet ainsi de définir un ciblage des équipements que le premier équipement souhaite détecter. Le premier équipement s'assure ainsi que les équipements recevant le premier message appartiendront au périmètre défini par la portée du premier message.

De plus, le procédé permet une détection mutuelle des équipements et est basée sur un processus collaboratif au cours duquel les équipements échangent, utilisent et vérifient leurs informations de communication. Cela permet en particulier aux équipements détectés de valider les estimations effectuées par le premier équipement. Le procédé permet notamment de comparer les informations de communication au stade de l'émission par un équipement et au stade de la réception par un autre équipement, de sorte à caractériser les conditions de propagation entre les deux équipements, en termes de distance ou de propagation en vue directe par exemple. Le procédé permet par exemple d'éviter une estimation unique, unilatérale et imprécise d'une distance séparant le premier équipement, émetteur d'un signal, et le second équipement, récepteur du signal.

Le premier équipement désigne un objet communicant, de préférence connecté, apte à échanger des informations et données sous forme de messages avec au moins un second équipement, différent du premier équipement. Le premier équipement est donc apte à émettre et/ou recevoir des messages sous forme d'ondes (ou de signaux) radiofréquences. Le premier équipement peut communiquer par l'intermédiaire d'antennes de communication intégrées à la structure de l'équipement par exemple. Le premier équipement et le second équipement peuvent avoir des structures autonomes, de sorte que chacun des premier et second équipements est apte à émettre des signaux à des puissances d'émission données et/ou à recevoir des signaux à des puissances de réception mesurées.

L'émission d'un premier message permet au premier équipement d'initier une détection d'éventuels autres équipements présents dans une zone de proximité définie par la portée du premier message et donc par la première puissance d'émission. Une telle portée dépend notamment des conditions de propagation du premier message et notamment de la présence éventuelle d'obstacles physiques.

La réception d'un second message permet au premier équipement de détecter la présence d'autres équipements (en l'occurrence ici, du second équipement) présents dans la zone de proximité définie par la portée du premier message. De tels équipements sont donc des équipements candidats à la mise en oeuvre d'une interaction par le premier équipement, dans le cadre d'une application de proximité par exemple. En particulier, la réception d'une donnée relative à la deuxième puissance d'émission du second message permet au premier équipement de quantifier des conditions de propagation du second message entre le second équipement et le premier équipement, notamment par un rapport entre la deuxième puissance d'émission par le second équipement et une deuxième puissance de réception par le premier équipement par exemple. La quantification de telles conditions de propagation du second message est ainsi basée sur des informations spécifiques à la fois au premier équipement (comme la seconde puissance de réception mesurée lors de la réception du second message) et au second équipement (comme la seconde puissance d'émission choisie par le second équipement).

L'émission d'un troisième message permet donc au premier équipement, suite à la détection d'un second équipement candidat pour la mise en oeuvre d'une interaction par le premier équipement, de valider une proximité entre le premier équipement et le second équipement. Une telle validation de proximité peut par exemple consister à vérifier la corrélation entre la troisième puissance d'émission du troisième message et une puissance à laquelle le troisième message sera reçu par le second équipement. Une telle validation de proximité peut être basée sur une première hypothèse de corrélation déterminée par le premier équipement entre la deuxième puissance d'émission et la deuxième puissance de réception du second message. Le troisième message peut ainsi permettre de valider une telle première hypothèse de corrélation. Une telle première hypothèse de corrélation peut par exemple être une hypothèse de vue directe (ou visibilité directe, en anglais « *Line of Sight* ») entre le premier équipement et le second équipement, qui impliquerait par exemple une proportionnalité entre la puissance de réception d'un message par le premier équipement en provenance du second équipement et le carré de la distance séparant les premier et second équipements.

Optionnellement, dans une autre forme de réalisation possible du procédé, il est proposé un procédé mis en oeuvre par un premier équipement, d'établissement d'une communication radiofréquence avec au moins un second équipement, à une puissance minimale d'émission cible, fonction d'une distance entre le premier équipement et le second équipement, le procédé comprenant :

a) une émission d'un premier message à une première puissance d'émission, ladite première puissance d'émission étant supérieure à la puissance minimale d'émission cible,

b) une réception d'au moins un second message en provenance au moins du second équipement, ledit second message étant reçu à une deuxième puissance de réception et comprenant une donnée relative à la deuxième puissance d'émission du second équipement,

c) une émission d'un troisième message à une troisième puissance d'émission à destination du second équipement, ladite troisième puissance d'émission étant déterminée sur la base de la deuxième puissance de réception et de la deuxième puissance d'émission.

Dans un mode de réalisation, le procédé comprend en outre :

une première estimation de la distance entre le premier équipement et le second équipement sur la base d'une deuxième puissance de réception du second message et de la deuxième puissance d'émission,

et dans lequel la troisième puissance d'émission est déterminée en outre sur la base de la première estimation de distance.

Par conséquent, le premier équipement est apte à quantifier la proximité entre le premier équipement et le second équipement par une première estimation de distance. Une telle quantification peut être mise en oeuvre grâce à des données reçues du second équipement (comme la deuxième puissance d'émission) et à des données déterminées par le premier équipement (comme la deuxième puissance de réception). De plus, une telle première estimation de distance peut reposer sur une première hypothèse de corrélation entre la deuxième puissance de réception et la deuxième puissance d'émission, par exemple liée à la présence d'une visibilité (ou vue) directe entre le premier et le second équipement, c'est-à-dire à l'absence d'obstacle physique déviant et/ou réfléchissant les ondes radios constituant les messages transmis entre les premier et second équipements. L'émission d'un tel troisième message permet alors, d'une part de valider une telle quantification de proximité par le premier équipement, et d'autre part, de valider une telle première hypothèse de corrélation.

Dans un mode de réalisation, le troisième message comprend au moins la première estimation de la distance.

Par conséquent, le second équipement recevra une telle première estimation de la distance mise en oeuvre par le premier équipement et pourra éventuellement confronter une telle première estimation à une possible estimation d'une telle distance mise en oeuvre du côté du second équipement.

Dans un mode de réalisation, le troisième message comprend au moins une donnée relative à la troisième puissance d'émission.

Par conséquent, le second équipement connaîtra la puissance à laquelle le troisième message reçu par le second équipement aura été émis par le premier équipement. Étant par ailleurs apte à mesurer une troisième puissance de réception lors de la réception du troisième message, le second équipement sera apte à formuler une deuxième hypothèse de corrélation entre les conditions de réception (notamment la troisième puissance de réception mesurée) et les conditions d'émission (notamment la troisième puissance d'émission reçue) du troisième message, à l'instar du premier équipement pour les conditions de réception et les conditions d'émission du deuxième message.

Dans un mode de réalisation, la communication radiofréquence étant établie en vue d'une application de proximité, ladite application de proximité étant caractérisée par au moins un critère de proximité entre le premier équipement et le second équipement,
et le troisième message est émis au moins sur la base dudit premier critère de proximité, d'une deuxième puissance de réception du second message et de la deuxième puissance d'émission.

Par conséquent, l'émission du troisième message par le premier équipement peut être conditionnée par un critère de proximité requis dans le cadre d'une application de proximité initiée par le premier équipement et pour laquelle le second équipement est un potentiel candidat. Ainsi, le troisième message peut contenir des informations différentes selon qu'un tel premier critère de proximité est satisfait ou non.

Dans un mode de réalisation, ledit critère de proximité correspond à une distance tolérée entre le premier équipement et le second équipement, et dans lequel le troisième message est émis sur la base d'une comparaison entre la première estimation de la distance et la distance tolérée.

Par conséquent, l'émission du troisième message peut être conditionnée par une comparaison entre la première estimation de distance par rapport à une distance tolérée dans le cadre de l'application de proximité initiée par le premier équipement. La distance tolérée peut être une distance maximale tolérée, par exemple dans le contexte d'une application de proximité pour le paiement sans contact (le premier équipement correspondant par exemple à une borne de paiement). Dans ce cas, le contenu et le rôle du troisième message dans le procédé de détection peuvent dépendre de la comparaison entre la première estimation de la distance et la distance tolérée. Si la première estimation de la distance est strictement supérieure à la distance tolérée, cela peut signifier soit, que la première estimation de distance est erronée, soit que la distance entre le premier équipement et le second équipement ne satisfait pas le critère de proximité de l'application de proximité mise en oeuvre. Le troisième message peut alors être un nouveau message de détection du premier équipement par exemple. Si la première estimation de la distance est inférieure à la distance tolérée, la détection de proximité avec le second équipement peut être poursuivie, par exemple par une validation d'une quantification de la proximité telle qu'estimée par le premier équipement. La distance tolérée peut également être une distance minimale tolérée, par exemple dans le contexte d'une application de proximité pour le maintien d'une distance de sécurité entre individus.

Dans un mode de réalisation, le procédé comprend en outre :

d) une réception d'un quatrième message en provenance du second équipement, ledit quatrième message étant reçu à une quatrième puissance de réception, le quatrième message comprenant au moins une donnée relative à une deuxième estimation de la distance entre le premier équipement et le second équipement.

Par conséquent, le premier équipement peut recevoir une réponse du second équipement suite au troisième message de validation de la quantification de proximité et/ou de la première hypothèse de corrélation. En particulier, le premier équipement est alors apte à confronter sa première estimation de la distance avec la deuxième estimation de la distance effectuée par le second équipement. Un tel quatrième message peut alors permettre au premier équipement de confirmer la validité de son estimation. Un tel quatrième message peut également permettre de confirmer la première hypothèse de corrélation traduisant une vue directe entre les premier et second équipements. Cela permet alors une mise en oeuvre optimisée de l'application de proximité en garantissant une estimation précise de la proximité entre les équipements concernés.

Au contraire, la réception d'un tel quatrième message peut également permettre d'infirmer les estimations du premier équipement quant à la proximité avec le second équipement, par exemple dans le cas où les données relatives à la deuxième estimation de la distance par le second équipement diffèrent sensiblement de celles du premier équipement. Un tel quatrième message permet alors au premier équipement d'orienter le procédé de détection de sorte à affiner sa quantification de proximité avec le second équipement, et à mieux identifier les conditions de propagation entre le premier équipement et le second équipement avant la mise en oeuvre de l'application de proximité.

Dans un mode de réalisation, la donnée relative à la deuxième estimation de la distance comprend un élément ou une combinaison d'éléments parmi :

- une valeur de la deuxième estimation de la distance,

- un écart entre la première estimation de la distance et la deuxième estimation de la distance, et

- une indication relative à une validité de la première estimation de la distance.

Par conséquent, la réception d'une telle donnée permet au premier équipement de déterminer si son estimation de proximité avec le second équipement est confirmée ou infirmée par les estimations du second équipement.

Dans un mode de réalisation, le quatrième message comprend en outre une donnée relative à une quatrième puissance d'émission du second équipement.

Par conséquent, le premier équipement est alors apte à mettre en oeuvre de nouvelles estimations sur la proximité entre le premier équipement et le second équipement, au regard des conditions de réception mesurées et des conditions d'émission obtenues du quatrième message. Le premier équipement est par ailleurs apte à vérifier les estimations effectuées par le second équipement.

Dans un mode de réalisation, les étapes c) et d) sont répétées en remplaçant la deuxième puissance de réception par la quatrième puissance de réception et la deuxième puissance d'émission par la quatrième puissance d'émission, si l'écart entre la première estimation de la distance et la deuxième estimation de la distance est supérieur à un seuil prédéfini.

Par conséquent, si les quantifications de proximité - et plus particulièrement de distances - (respectivement estimées sur les deuxième et troisième messages) divergent entre les premier et second équipements, le procédé de détection de proximité peut être réitéré avec les conditions d'émission et de réception des messages suivants. Le procédé peut ainsi être réitéré par un message requérant une validation d'une estimation de proximité par le premier équipement et un message retour du second équipement confirmant ou non une telle estimation. Une condition d'arrêt de telles itérations peut consister en un nombre maximal de répétition à l'issue duquel la mise en oeuvre de l'application de proximité avec le second équipement peut être abandonnée. Une autre condition d'arrêt peut consister à répéter le procédé jusqu'à ce que les estimations de proximité respectives des premier et second équipements convergent à un seuil d'erreur prédéfini près.

Dans un mode de réalisation, la deuxième puissance d'émission du second équipement est inférieure à la première puissance d'émission du premier équipement.

Par conséquent, lors de l'envoi du second message, le second équipement peut d'ores et déjà procéder à une quantification (implicite ici) de la proximité entre le premier équipement et le second équipement. En effet, si le second équipement estime que la puissance de réception du premier message effectivement mesurée par le second équipement est bien plus importante que la puissance de réception nécessaire pour recevoir le premier message, le second équipement peut émettre le second message à une puissance différente et inférieure à la première puissance d'émission. La deuxième puissance d'émission reste choisie de sorte que le second message atteigne la position du premier équipement.

Dans un mode de réalisation, le premier message comprend en outre un élément ou une combinaison d'éléments parmi :

- un identifiant du premier équipement,

- des données relatives à une mise en oeuvre d'une application de proximité par le premier équipement.

Par conséquent, le premier message permet d'indiquer une intention potentielle du premier équipement d'établir une interaction avec l'équipement recevant un tel premier message. Le contenu d'un tel premier message est particulièrement utile dans la mesure où le premier message peut être un message diffusé (de type broadcast par exemple) sans viser aucun équipement en particulier. Le contenu du premier message permet alors aux équipements n'étant pas aptes à interagir avec le premier équipement dans le cadre d'une telle application de proximité, de ne pas répondre au premier message (en n'émettant pas de second message par exemple).

Dans un mode de réalisation, le second message comprend en outre un élément ou une combinaison d'éléments parmi :

- des données relatives à des conditions de réception du premier message par le second équipement,

- un identifiant du second équipement,

- des données relatives à une mise en oeuvre d'une application de proximité par le second équipement.

Par conséquent, le contenu du second message permet au premier équipement d'identifier les équipements ayant reçu le premier message et donc les équipements candidats à l'interaction avec le premier équipement dans le cadre de l'application de proximité. Un tel contenu du second message permet notamment au premier équipement d'adapter le contenu du troisième message, un tel troisième message étant *a priori* émis de façon dédiée au second équipement.

Selon un second aspect, il est proposé un premier équipement comprenant au moins :

- une unité mémoire,

- une unité de traitement comprenant au moins un processeur,

le premier équipement étant adapté pour mettre en oeuvre le procédé.

Selon un troisième aspect, il est proposé un programme informatique comportant des instructions pour la mise en oeuvre du procédé lorsque ce programme est exécuté par un processeur.

## Brève description des dessins

D'autres caractéristiques, détails et avantages apparaîtront à la lecture de la description détaillée ci-après, et à l'analyse des dessins annexés, sur lesquels :

**Fig. 1**

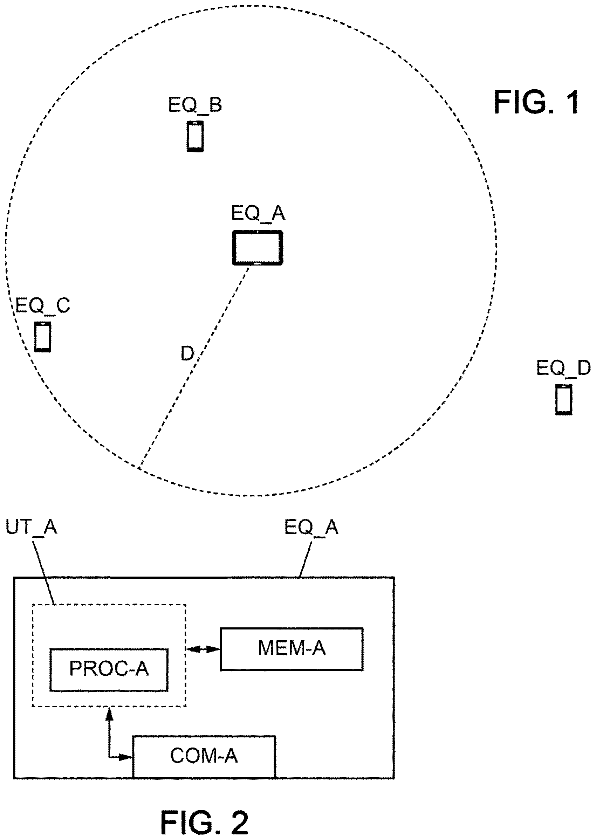

[Fig. 1] montre des positions respectives de quatre équipements selon un mode de réalisation.

**Fig. 2**
[Fig. 2] montre une structure d'un équipement selon un mode de réalisation.

**Fig. 3**

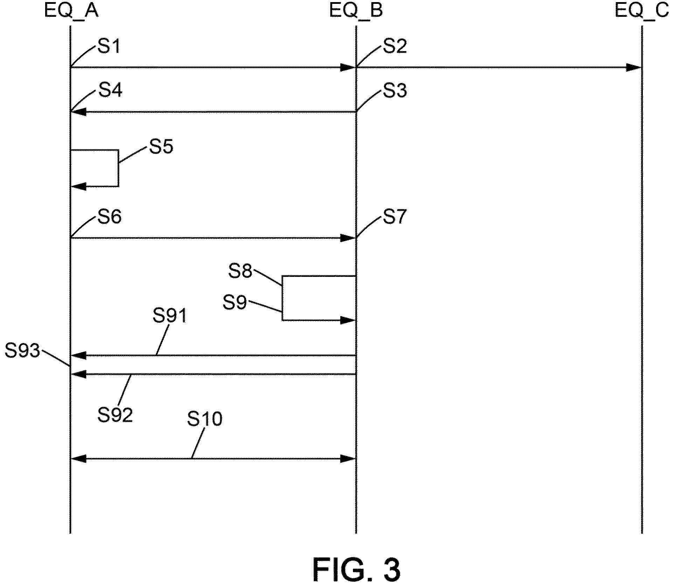

[Fig. 3] montre un procédé de détection d'équipements selon un mode de réalisation.

**Fig. 4**

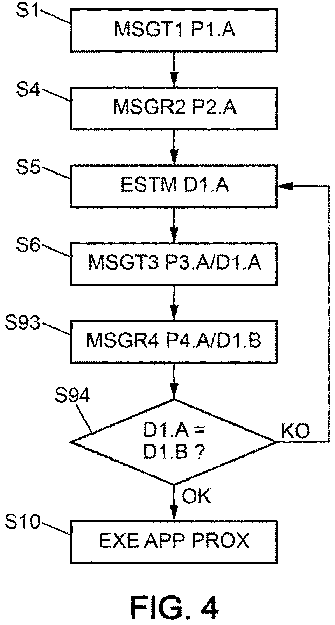

[Fig. 4] montre un procédé de détection d'équipements mis en oeuvre par un premier équipement selon un mode de réalisation.

**Fig. 5**

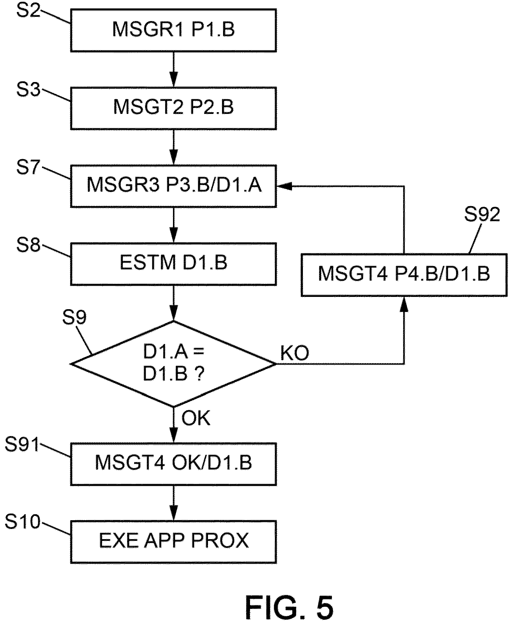

[Fig. 5] montre un procédé de détection d'équipements mis en oeuvre par un second équipement selon un mode de réalisation.

Il est fait référence aux figures 1 et 2. La figure 1 représente un système composé de plusieurs équipements EQ_A, EQ_B, EQ_C et EQ_D (ou EQ_A-EQ_D). Chaque équipement EQ_A-EQ_D est un objet communicant apte à émettre, recevoir et plus généralement à échanger des informations et des données avec d'autres objets de type objets communicants, serveurs et/ou avec des utilisateurs. Les équipements EQ_A-EQ_D peuvent être des objets communicants connectés ou non. Dans le cas d'objets communicants connectés, les équipements EQ_A-EQ_D peuvent être connectés à un réseau de communication non représenté sur la figure 1, comme Internet par exemple. Les équipements EQ_A-EQ_D sont des objets ayant une communication autonome, de sorte qu'ils peuvent communiquer avec d'autres objets sans intervention humaine. Par ailleurs, les équipements EQ_A-EQ_D ont également une autonomie énergétique. Pour cela, les équipements peuvent comprendre une source d'énergie intégrée comme une batterie (non représentée sur les figures 1 et 2).

Chaque équipement EQ_A-EQ_D est apte, d'une part, à émettre (ou transmettre) des signaux (ou messages) sous forme d'ondes radiofréquences. De tels messages peuvent correspondre à des transmissions de type *broadcast, multicast* et/ou *unicast* par exemple. D'autre part, chaque équipement EQ_A-EQ_D est apte à recevoir des messages émis par d'autres objets. À ces fins et comme illustré sur la figure 2, chaque équipement EQ_A-EQ_D comprend une unité de communication COM-A (respectivement COM-B, COM-C, COM-D pour les équipements EQ_B-EQ_D). Une telle unité de communication COM-A peut comprendre une antenne de réception radiofréquence. Une telle unité de communication COM-A peut également comprendre une antenne de transmission radiofréquence. Pour chaque équipement, chaque antenne radiofréquence possède un gain (ou pouvoir d'amplification, exprimé en décibel isotrope ou dBi par exemple) des signaux traités par l'antenne. L'unité de communication COM-A peut également comprendre une interface homme-machine.

D'autre part, chaque équipement EQ_A-EQ_D est apte à traiter le contenu de tels messages émis et reçus. À cette fin et comme illustré sur la figure 2, chaque équipement EQ_A-EQ_D comprend une unité de traitement UT_A (respectivement UT_B, UT_C, UT_D pour les équipements EQ_B-EQ_D), composée à minima d'un processeur PROC-A (respectivement UT_B, UT_C, UT_D pour les équipements EQ_B-EQ_D). Une telle unité de traitement UT_A possède une ou plusieurs unités de calcul (non représentées sur la figure 2). Par exemple, une unité de calcul de chaque équipement EQ_A-EQ_D est apte à convertir les signaux radiofréquence (par exemple sous forme analogique) en un ensemble de valeurs numériques comprenant par exemple la puissance du signal. Par exemple, une unité de calcul de chaque équipement EQ_A-EQ_D est apte à implémenter des calculs de distances à partir de valeurs de puissances connues (mesurées ou reçues). L'unité de traitement UT_A est également apte à mettre en oeuvre l'application de proximité, par exemple par l'émission de données spécifiques à l'application de proximité (comme un reçu de paiement ou une alerte) via l'unité de communication COM-A. Plus généralement, l'unité de traitement UT_A de chaque équipement EQ_A-EQ_D est apte à exécuter des instructions et/ou protocoles algorithmiques stockés sous forme de logiciels ou de tout autre type de supports informatiques non transitoires.

Enfin, chaque équipement EQ_A-EQ_D est apte à stocker le contenu de messages émis et/ou reçus. Pour cela et comme illustré sur la figure 2, chaque équipement EQ_A-EQ_D comprend une unité mémoire MEM-A. Une telle unité mémoire MEM-A peut comprendre une mémoire vive. L'unité mémoire MEM-A est apte à stocker des valeurs prédéterminées et/ou des données préconfigurées. L'unité mémoire MEM-A peut par exemple stocker des valeurs de puissance d'émission cible P ou de distance tolérée D pour une application de proximité donnée. L'unité mémoire MEM-A peut également stocker des valeurs de puissances d'émission, de puissances de réception et/ou des valeurs de distance estimées reçues ou déterminées par l'équipement EQ_A-EQ_D.

De tels équipements EQ_A-EQ_D peuvent correspondre à tous types d'appareils fixes ou mobiles comme des smartphones, tablettes, montres connectées, enceintes connectées etc. par exemple. Les équipements EQ_A-EQ_D, tels que représentés sur la figure 1, ont chacun une position géographique dans l'espace. Une telle position géographique peut être fixe au fil du temps, dans le cas d'une enceinte connectée posée dans une pièce par exemple, ou variable au fil du temps, dans le cas d'équipements mobiles solidaires d'utilisateurs en mouvement (comme leurs appareils mobiles) par exemple. Dans le cadre de la présente description, on considère que chaque équipement EQ_A-EQ_D peut avoir une position géographique fixée dans l'espace, au moins pour un laps de temps donné. Un tel laps de temps peut être de l'ordre de quelques secondes ou quelques minutes par exemple.

Une distance peut être définie pour chaque couple (ou paire) d'équipements EQ_A-EQ_D, une telle distance étant fixe ou variable en fonction des positions géographiques fixes ou variables des équipements EQ_A-EQ_D.

Dans la suite de la description, les termes « équipement », « équipement communicant », « objet » ou « objet communicant » seront utilisés de façon interchangeable.

En référence à la figure 1, on considère un premier équipement EQ_A. Un tel premier équipement EQ_A peut correspondre par exemple à une borne de paiement ayant un positionnement fixé dans une zone de péage ou encore une tablette interactive fixée à côté d'une oeuvre dans un musée. Le premier équipement EQ_A peut, dans un autre exemple, correspondre à un terminal mobile d'un individu se déplaçant dans un bâtiment fermé (comme un supermarché par exemple). On considère également une application de proximité (ou interaction de proximité) impliquant le premier équipement EQ_A. Par exemple, l'application de proximité peut consister à envoyer un reçu de paiement à un équipement mobile d'un conducteur passé par la borne de paiement. L'application de proximité peut consister à envoyer une présentation de l'œuvre sur les terminaux mobiles de visiteurs étant à proximité de l'œuvre. Dans un autre exemple, l'application de proximité peut consister pour le terminal mobile de l'individu à notifier l'individu (par exemple par un message d'alerte transmis via une interface homme-machine du terminal mobile) lorsqu'un autre terminal mobile (et donc un autre individu) se situe à une distance de moins d'un mètre de l'individu dans le contexte d'un respect d'une distance de sécurité lors de la gestion d'une crise sanitaire.

Plus généralement, l'application de proximité consiste, pour le premier équipement EQ_A, à détecter d'éventuels autres équipements situés dans un voisinage prédéterminé. Un tel voisinage peut être caractérisé par une puissance d'émission cible P. Une telle puissance d'émission cible P permet alors de définir une portée caractérisant l'application de proximité. Autrement dit, la puissance d'émission cible P définit une zone de proximité autour du premier équipement EQ_A dans laquelle est exécutée l'application de proximité. La puissance d'émission cible P peut notamment être reliée à une distance tolérée D entre le premier équipement EQ_A et un autre équipement avec lequel le premier équipement EQ_A peut interagir via l'application de proximité. Une telle distance tolérée D est par exemple représentée sur la figure 1, et délimite le voisinage du premier équipement EQ_A dans le cadre de l'application de proximité par un cercle centré sur la position du premier équipement EQ_A et de rayon D. Le voisinage du premier équipement EQ_A peut également être délimité dans une zone non circulaire, notamment en présence d'obstacles physiques présents dans l'environnement du premier équipement EQ_A.

La distance tolérée D peut être une distance maximale tolérée D. Concernant l'exemple d'une application de proximité exécutée par une tablette interactive (correspondant au premier équipement EQ_A sur la figure 1, par exemple) et consistant à envoyer une présentation d'une oeuvre (dans un musée) sur les terminaux mobiles de visiteurs se trouvant à proximité de l'œuvre, cette application peut être exécutée par la tablette interactive lorsque des terminaux mobiles de visiteurs sont déterminés comme étant à une distance inférieure à une distance maximale tolérée D (correspondant aux équipements EQ_B et EQ_C sur la figure 1, par exemple). Au-delà d'une telle distance maximale tolérée D, on considère alors que les visiteurs ne sont pas en train de regarder l'œuvre (par exemple, l'équipement EQ_D ne recevra pas de présentation de l'œuvre par le premier équipement EQ_A sur la figure 1). La distance tolérée D peut également être une distance minimale tolérée D. Par exemple, pour l'application de proximité exécutée par un premier terminal mobile d'un premier individu (correspondant au premier équipement EQ_A sur la figure 1) et consistant à détecter si un autre individu se situe à une distance de moins d'un mètre du premier individu, dans le contexte d'un respect d'une distance de sécurité lors de la gestion d'une crise sanitaire, le premier terminal mobile peut stocker une distance minimale tolérée D correspondant à la distance de sécurité (ici un mètre). Par conséquent, l'application de proximité peut consister, pour le premier terminal mobile, à alerter le premier individu (et/ou les autres terminaux détectés) de la présence d'un ou de plusieurs autre(s) terminaux mobiles situés en deçà de la distance de sécurité. En référence à la figure 1 dans le cadre d'un tel exemple, le premier individu (possédant le terminal EQ_A) sera notifié de la proximité de deux terminaux mobiles EQ_B et EQ_C.

L'exécution d'une application de proximité requiert alors, pour un équipement donné (ici, le premier équipement EQ_A), de détecter, dans un premier temps, la proximité éventuelle d'autres équipements EQ_B, EQ_C. L'exécution de l'application de proximité peut ensuite requérir d'estimer, dans un second temps, une distance avec chacun des équipements EQ_B, EQ_C détectés. À ces fins, un procédé de détection entre objets communicants est détaillé aux figures 3 à 5.

Il est maintenant fait référence aux figures 3, 4 et 5. La figure 3 représente un procédé de détection entre objets communicants, dans le contexte de la mise en oeuvre d'une application de proximité par exemple. Les figures 4 et 5 détaillent un tel procédé de détection tel que mis en oeuvre respectivement par un premier équipement EQ_A initiant le procédé de détection, et par un deuxième équipement EQ_B détecté dans un voisinage du premier équipement EQ_A.

Le procédé de détection est décrit pour une interaction de proximité entre un premier équipement EQ_A et un second équipement EQ_B. Le procédé est cependant applicable pour détecter la proximité de plusieurs objets communicants. Le procédé est décrit comme étant initié par le premier équipement EQ_A. Cependant, les autres équipements EQ_B-EQ_D peuvent avoir une structure équivalente à la structure du premier équipement EQ_A telle que représentée sur la figure 2 et chaque équipement EQ_B-EQ_D peut également initier le procédé de détection de proximité.

Le procédé de détection décrit par les figures 3 à 5 comprend une phase de détection, par le premier équipement EQ_A, de la présence éventuelle d'un ou de plusieurs autres équipements EQ_B, EQ_C dans un voisinage du premier équipement EQ_A. Un tel voisinage est caractérisé par une puissance minimale d'émission P et/ou une distance tolérée D. En référence à la figure 3, les étapes S1, S2, S3 et S4 détaillent une phase de détection de l'objet communicant EQ_B.

Le procédé de détection peut également comprendre une phase de validation de distance entre le premier équipement EQ_A et chacun des équipements EQ_B, EQ_C détectés dans le voisinage du premier équipement EQ_A lors de la phase de détection. En référence à la figure 3, les étapes S5, S6, S7, S8, S9, S91, S92 et S93 détaillent une phase de validation de distance entre le premier équipement EQ_A et le second équipement EQ_B. En particulier, une telle phase de validation de distance du procédé de détection peut notamment comprendre une phase de validation de la présence (ou non) d'une visibilité directe entre le premier équipement EQ_A et chacun des équipements EQ_B, EQ_C détectés. Une telle validation de la présence ou de l'absence d'une visibilité directe permet ainsi de détecter la présence éventuelle d'obstacles physiques (comme un mur) entre le premier équipement EQ_A et un ou plusieurs autres équipements EQ_B, EQ_C détectés, ce qui peut fausser la notion de proximité entre deux équipements. En effet, la plupart des applications de proximité requièrent une proximité selon une vue directe entre les équipements : par exemple, une présentation d'un tableau accroché à un mur n'est pas censée être envoyée à des terminaux mobiles de visiteurs situés derrière le mur, de tels visiteurs étant potentiellement proche en distance (à "vol d'oiseau") de l'œuvre mais se situant en fait dans une pièce voisine à la pièce dans laquelle se situe l'œuvre.

Dans le contexte du procédé décrit, les équipements EQ_A-EQ_D sont considérés comme ayant chacun un positionnement fixé, ou ayant du moins un positionnement relatif sensiblement constant les uns aux autres durant le laps de temps d'exécution du procédé de détection de proximité.

En référence aux figures 3 et 4, à une étape S1, le premier équipement EQ_A a un positionnement donné et fixé dans l'espace. Le premier équipement EQ_A initie la phase de détection en envoyant un premier message sous forme d'un signal radiofréquence. Le premier message est émis avec une première puissance d'émission P1.A. L'envoi d'un tel premier message à la première puissance d'émission P1.A vise à atteindre tous les éventuels autres équipements communicants présents dans une zone de proximité (ou voisinage) définie par la portée de la première puissance d'émission P1.A. Ainsi, la première puissance d'émission P1.A est choisie par le premier équipement EQ_A de sorte à être supérieure à la puissance d'émission cible P. Une telle puissance d'émission cible P est propre à l'application de proximité exécutée par le premier équipement EQ_A. La puissance d'émission cible P est par ailleurs reliée à une distance tolérée D entre le premier équipement EQ_A et un autre équipement pour l'exécution de l'application de proximité. Le premier message est donc contraint en portée par la première puissance d'émission P1.A. Ainsi, les équipements situés au-delà d'une telle portée ne recevront pas le premier message. En référence à la figure 1, l'équipement EQ_D par exemple se situe hors de la portée du premier message. Le premier message est une diffusion contrainte uniquement par la première puissance d'émission P1.A et ne vise donc *a priori* aucun équipement donné. Le premier message peut par exemple être envoyé sous la forme d'un message *broadcast.* Un tel premier message est alors potentiellement reçu par plusieurs équipements communicants distincts EQ_B, EQ_C. De tels équipements ne sont *a priori* pas identifiés par le premier équipement EQ_A à ce stade. En référence à la figure 1, un tel premier message envoyé à l'étape S1 par le premier équipement EQ_A atteint une portée sensiblement représentée par le cercle illustré sur la figure 1. En variante, la portée du premier message peut être non circulaire autour du premier équipement EQ_A, notamment dans le cas d'obstacles physiques ou de champs magnétiques environnants et perturbant la propagation du premier message.

Le premier message peut par exemple s'apparenter à un message d'établissement de liaison (en anglais « *handshake* »). Le premier message peut comprendre des données transmises par le premier équipement EQ_A et comprenant un élément ou une combinaison d'éléments parmi:

- des informations relatives à l'application de proximité, comme un contexte de l'application de proximité ou encore un périmètre de proximité associé à l'application de proximité (via la valeur de la puissance d'émission cible P ou de la distance tolérée D, par exemple),

- des informations indiquant par exemple une intention du premier équipement EQ_A d'établir une interaction dans le cadre d'une telle application de proximité,

- un élément d'identification du premier équipement EQ_A,

- des données relatives à la première puissance d'émission P1.A.

Les données relatives à la première puissance d'émission P1.A peuvent par ailleurs inclure :

- une valeur explicite de la première puissance d'émission P1.A elle-même, ou

- une numérotation ou une référence du premier message émis permettant d'indiquer la valeur de la première puissance d'émission P1.A de façon implicite, notamment dans le cas d'un protocole (ou système) de communication normalisé entre le premier équipement EQ_A et le second équipement EQ_B. En effet, dans le cas d'un système normalisé, les équipements EQ_A-EQ_D envoient des messages successifs à des puissances d'émission successives préconfigurées et connues des autres équipements EQ_A-EQ_D. L'envoi d'une numérotation du premier message émis permet alors à l'équipement préconfiguré recevant le premier message émis, d'identifier le message reçu dans le protocole de communication et donc de déduire la valeur de la première puissance d'émission P1.A.

À une étape S2, le premier message est reçu par un second équipement EQ_B et un troisième équipement EQ_C comme illustré sur la figure 3. Dans la suite et pour simplifier la description, seul le procédé de détection entre les premier et second équipements EQ_A, EQ_B sera détaillé, comme illustré sur les figures 3 et 5. Cependant, un procédé de détection entre les premier et troisième équipements EQ_A, EQ_C peut également être mis en oeuvre de façon similaire, en parallèle des étapes décrites par la suite.

À l'étape S2, le second équipement EQ_B reçoit le premier message émis par le premier équipement EQ_A via son unité de communication COM-B (via une antenne de réception radiofréquence par exemple) à une première puissance de réception P1.B. La première puissance de réception P1.B est *a priori* inférieure à la première puissance d'émission P1.A. En effet, le signal radiofréquence correspondant au premier message peut être atténué lors de sa propagation, notamment dû à l'absorption atmosphérique, à la présence de champs magnétiques sur la trajectoire du signal, ou encore à de possibles réflexions multiples du signal entre son émission par le premier équipement EQ_A et sa réception par le second équipement EQ_B.

À l'issue de l'étape S2, le second équipement EQ_B identifie l'intention du premier équipement EQ_A d'initier une interaction de proximité dans son voisinage. Le second équipement EQ_B identifie également que le second équipement EQ_B appartient à un tel voisinage.

Comme illustré sur les figures 3 et 5, à une étape S3, le second équipement EQ_B émet, en réponse au premier message reçu, un second message à une deuxième puissance d'émission P2.B. Le second message est *a priori* une transmission point par point (en anglais « *unicast* ») à destination du premier équipement EQ_A. Le second message peut par exemple s'apparenter à un message d'acquittement (ou ACK) pour informer le premier équipement EQ_A que le premier message a été reçu par le second équipement EQ_B. Le second message peut comprendre un élément ou une combinaison d'éléments parmi:

- des informations spécifiques au second équipement EQ_B relatives à l'exécution de l'application de proximité et/ou indiquant par exemple des conditions d'interaction du second équipement EQ_B dans le cadre d'une telle application de proximité,

- un élément d'identification du second équipement EQ_B,

- des données relatives aux conditions de réception du premier message par le second équipement EQ_B, notamment liées aux caractéristiques de l'antenne de réception radiofréquence du second équipement EQ_B comme le gain d'antenne de réception par exemple.

La deuxième puissance d'émission P2.B du second équipement EQ_B est choisie par le second équipement EQ_B de sorte à assurer que le premier équipement EQ_A est dans la portée du second message. Une telle deuxième puissance d'émission P2.B peut être égale à la première puissance d'émission P1.A telle que lue par le second équipement EQ_B dans le contenu du premier message. En particulier, la deuxième puissance d'émission P2.B peut être inférieure à la première puissance d'émission P1.A, notamment si le second équipement EQ_B détermine que la portée atteinte par le premier message est supérieure à la portée requise pour atteindre le second équipement EQ_B. Autrement dit, le premier message peut être reçu à une première puissance de réception P1.B trop importante comparée à une puissance de réception requise par l'application de proximité. Pour cela, le second équipement EQ_B peut déterminer un rapport entre la première puissance d'émission P1.A contenue dans le premier message et la première puissance de réception P1.B mesurée par le second équipement EQ_B. Le second équipement EQ_B peut alors choisir d'envoyer le second message à une deuxième puissance d'émission P2.B si un tel rapport est supérieur à un facteur prédéfini par exemple, une telle deuxième puissance d'émission P2.B étant toujours choisie de sorte à garantir que le premier équipement EQ_A est dans la portée du second message.

En particulier, le second message comprend au moins une donnée relative à la deuxième puissance d'émission P2.B. De telles données relatives à la deuxième puissance d'émission P2.B peuvent inclure :

- une valeur explicite de la deuxième puissance d'émission P2.B elle-même, ou

- une numérotation ou une référence du second message émis permettant d'indiquer la valeur de la deuxième puissance d'émission P2.B de façon implicite dans le cas d'un système de communication normalisé entre les premier et second équipements EQ_A, EQ_B.

Comme illustré sur les figures 3 et 4, à une étape S4, le premier équipement EQ_A reçoit le second message émis par le second équipement EQ_B. Le second message est reçu par le premier équipement EQ_A avec une deuxième puissance de réception P2.A. À ce stade, la phase de détection du procédé de détection est aboutie : le premier équipement EQ_A a détecté la présence d'un autre équipement (à savoir le second équipement EQ_B) dans le voisinage d'interaction avec le premier équipement EQ_A dans le cadre de l'application de proximité. Le premier équipement EQ_A est donc assuré que le second équipement EQ_B est dans la portée de la puissance d'émission cible P. Le premier équipement EQ_A peut alors procéder à la phase de validation d'une distance avec le second équipement EQ_B de sorte à affiner le procédé de détection.

Comme illustré sur les figures 3 et 4, à une étape S5, le second message est interprété par l'unité de traitement UT_A du premier équipement EQ_A. D'une part, le premier équipement EQ_A connaît la puissance d'émission du second message (correspondant à la deuxième puissance d'émission P2.B) par le second équipement EQ_B grâce aux données relatives à la deuxième puissance d'émission P2.B reçues dans le contenu du second message. D'autre part, le premier équipement EQ_A est apte à mesurer la deuxième puissance de réception P2.A du second message. À partir de ces deux valeurs P2.A et P2.B, l'unité de traitement UT_A du premier équipement EQ_A procède, à l'étape S5, à une première estimation D1.A de la distance entre le premier équipement EQ_A et le second équipement EQ_B. Une telle première estimation D1.A peut par exemple être obtenue par l'application de l'équation de Friis (ou équation des télécommunications) reliant, pour un signal (ici le second message), la puissance d'émission par un objet émetteur (ici la deuxième puissance d'émission P2.B du second équipement EQ_B), la puissance de réception (ici la deuxième puissance de réception P2.A du premier équipement EQ_A) et la distance entre les objets émetteur et récepteur (ici la première estimation D1.A de distance) par :

[Math.1]

$$\frac{P_{r\acute{e}c}}{P_{\acute{e}m}} = G_{\acute{e}m}G_{r\acute{e}c}\left(\frac{\lambda}{4\pi d}\right)^2$$

où :

- $P_{r\acute{e}c}$ correspond à la puissance de réception par l'objet récepteur,
- $P_{\acute{e}m}$ correspond à la puissance d'émission par l'objet émetteur,
- $G_{\acute{e}m}$ correspond au gain de l'antenne d'émission, ici celle du second équipement EQ_B,
- $G_{r\acute{e}c}$ correspond au gain de l'antenne de réception, ici celle du premier équipement EQ_A,
- $\lambda$ correspond à la fréquence du signal radiofréquence, ici celle du second message, et
- d correspond à la distance entre les objets émetteur et récepteur, ici la première estimation de distance entre le premier équipement EQ_A et le second équipement EQ_B.

Une telle équation [Math.1] peut par ailleurs être adaptée de sorte à prendre en compte des facteurs d'incertitude liés par exemple :

- aux pertes d'antennes, liées aux sensibilités des antennes de réception et d'émission des premier et second équipements EQ_A, EQ_B respectivement, et/ou
- au pointage des antennes de réception et d'émission,
- à la polarisation et/ou au non-alignement des antennes de réception et d'émission,
- aux pertes atmosphériques liées à l'humidité, la dispersion et/ou la réfraction entre autres dans l'environnement de propagation du second message.

En particulier, une telle première estimation D1.A de distance repose, à ce stade, sur une hypothèse selon laquelle la propagation du second message est effectuée selon une visibilité directe (en anglais « *Line-of-Sight* » ou « *LoS* »). Le rapport entre la deuxième puissance de réception P2.A et la deuxième puissance d'émission P2.B est considéré par le premier équipement EQ_A comme inversement proportionnel au carré de la première estimation D1.A de distance. Ainsi, l'écart entre la deuxième puissance de réception P2.A et la deuxième puissance d'émission P2.B est mis en corrélation directe avec la distance séparant le premier équipement EQ_A et le second équipement EQ_B. Par exemple, à l'étape S5, plus le rapport entre la deuxième puissance de réception P2.A et la deuxième puissance d'émission P2.B est faible, plus la première estimation D1.A de distance par le premier équipement EQ_A sera grande.

À l'issue de l'étape S5, le premier équipement EQ_A a déterminé une première estimation D1.A de distance avec le second équipement EQ_B sur la base du second message reçu à l'étape S4 et selon l'hypothèse d'une visibilité directe entre les premier et second équipements EQ_A, EQ_B. En particulier, le premier équipement EQ_A vérifie que la première estimation D1.A de distance est bien inférieure à la distance tolérée D. Dans le cas contraire, l'étape S1 d'émission du premier message est réitérée par le premier équipement EQ_A.

Comme illustré par les figures 3 et 4, à une étape S6, le premier équipement EQ_A émet un troisième message à destination du second équipement EQ_B. Un tel troisième message vise notamment à valider la première estimation D1.A de distance du premier équipement EQ_A auprès du second équipement EQ_B. Pour cela, le troisième message est émis par le premier équipement EQ_A avec une troisième puissance d'émission P3.A déterminée en corrélation avec la première estimation D1.A de distance. La détermination d'une telle troisième puissance d'émission P3.a prend notamment en compte des caractéristiques physiques et capacitives de la transmission radiofréquence du troisième message comme la fréquence de propagation du troisième message, les propriétés d'émission de l'antenne d'émission du premier équipement EQ_A ou encore les propriétés de réception de l'antenne de réception du second équipement EQ_B par exemple. La détermination d'une telle troisième puissance d'émission P3.a prend également en compte des critères de l'application de proximité en relation avec la première estimation D1.A de distance, par exemple, selon que l'application de proximité requiert ou non que la distance entre les premier et second équipements EQ_A, EQ_B soit sensiblement égale à la distance tolérée D, ou soit comprise entre la distance tolérée D et la première estimation D1.A de distance, par exemple. La troisième puissance d'émission P3.A peut en particulier être déterminée par l'unité de traitement UT_A du premier équipement EQ_A en appliquant une matrice de décision prenant en compte de tels critères et caractéristiques, compte tenu de la première estimation D1.A de distance. Ainsi, à l'étape S6, le premier équipement EQ_A émet le troisième message avec une troisième puissance d'émission P3.A sur l'hypothèse que le second équipement EQ_B est situé à une distance égale à la première estimation D1.A de distance. Le troisième message comprend, de façon analogue aux messages précédents, des données relatives à la troisième puissance d'émission P3.A du premier équipement EQ_A. Le troisième message peut également comprendre par ailleurs la première estimation D1.A de distance par le premier équipement EQ_A.

L'émission d'un tel troisième message initie également la phase de validation ou non de la présence d'une vue directe entre le premier équipement EQ_A et le second équipement EQ_B. En effet, l'hypothèse d'une vue directe est testée par le premier équipement EQ_A avec l'envoi de la troisième puissance d'émission P3.A. La distance d entre le premier équipement EQ_A et le second équipement EQ_B étant considérée par le premier équipement EQ_A comme étant égale à la première estimation D1.A de distance, le premier équipement EQ_A est apte à prédire une puissance de réception théorique au troisième message par le second équipement EQ_B sur l'hypothèse d'une visibilité directe entre les premier et second équipements EQ_A, EQ_B. Le premier équipement EQ_A peut notamment définir un rapport seuil Rs correspondant à un rapport entre la troisième puissance d'émission P3.A et la puissance de réception théorique prédite.

Comme illustré par les figures 3 et 5, à une étape S7, le second équipement EQ_B reçoit le troisième message émis par le premier équipement EQ_A à une troisième puissance de réception P3.B. En particulier, le second équipement EQ_A reçoit, via le troisième message, la valeur de la puissance d'émission du troisième message (à savoir la valeur exacte de la troisième puissance d'émission P3.A). Le second équipement EQ_B peut également recevoir la première estimation D1.A de distance effectuée par le premier équipement EQ_A.

Comme illustré par les figures 3 et 5, à une étape S8, le second équipement EQ_B peut également procéder à son tour à une détermination d'une deuxième estimation D1.B de distance entre les premier et second équipements EQ_A, EQ_B. Pour cela, l'unité de traitement UT_B du second équipement EQ_B peut par exemple appliquer la formule [Math.1] en remplaçant $P_{ém}$ par la troisième puissance d'émission P3.A et $P_{réc}$ par la troisième puissance de réception P3.B.

Comme illustré par les figures 3 et 5, à une étape S9, le second équipement EQ_B peut alors comparer la deuxième estimation D1.B de distance par le second équipement EQ_B à l'étape S8 à la première estimation D1.A de distance par le premier équipement EQ_A à l'étape S5.

Si, dans un premier cas, la deuxième estimation D1.B de distance par le second équipement EQ_B est sensiblement égale à la première estimation D1.A de distance par le premier équipement EQ_A (à une valeur seuil ε prédéfinie donnée), l'hypothèse d'une visibilité directe admise par le premier équipement EQ_A à l'étape S3 est *a priori* correcte et validée par les calculs du second équipement EQ_B. La phase de validation d'une visibilité directe entre le premier équipement EQ_A et le second équipement EQ_B est alors aboutie. Dans ce premier cas, à une étape S91, le second équipement EQ_B émet un quatrième message à destination du premier équipement EQ_A. Un tel quatrième message vise alors à valider (ou confirmer) la première estimation D1.A de distance par le premier équipement EQ_A. Le quatrième message peut alors comprendre la deuxième estimation D1.B de distance par le second équipement EQ_B. En variante, le quatrième message peut comprendre un écart (un tel écart étant donc inférieur à la valeur seuil ε) entre les première et deuxième estimations D1.A, D1.B de distance et/ou une valeur booléenne indiquant une confirmation que les premier et second équipements EQ_A, EQ_B ont déterminé une estimation de distance sensiblement commune (à la valeur seuil ε près).

Au contraire, si, dans un second cas, à l'issue de l'étape S9, la deuxième estimation D1.B de distance par le second équipement EQ_B diffère de la première estimation D1.A de distance, (par exemple les deux estimations D1.A, D1.B de distance ayant un écart supérieur à la valeur seuil ε prédéfinie), l'hypothèse d'une visibilité directe admise par le premier équipement EQ_A à l'étape S5 est *a priori* invalidée par les calculs du second équipement EQ_B. La phase de validation d'une absence de visibilité directe entre le premier équipement EQ_A et le second équipement EQ_B est alors aboutie. Dans ce second cas, à l'étape S92, le quatrième message émis par le second équipement EQ_B à destination du premier équipement EQ_A vise alors à infirmer la première estimation D1.A de distance par le premier équipement EQ_A. Le quatrième message peut comprendre la deuxième estimation D1.B de distance par le second équipement EQ_B.

La phase de validation d'une visibilité directe (ou non) entre les premier et second équipements EQ_A, EQ_B peut également être aboutie sans que le second équipement EQ_B n'effectue de deuxième estimation D1.B de distance. Une telle étape (non représentée sur les figures 3 et 5) peut consister, pour le second équipement EQ_B, à l'issue de l'étape S7 de réception du troisième message, à déterminer, d'une part, la puissance de réception théorique à laquelle le second équipement EQ_B est sensé recevoir le troisième message, dans l'hypothèse admise par le premier équipement EQ_A. Autrement dit, avec la première estimation D1.A de distance et la troisième puissance d'émission P3.A reçues, l'unité de traitement UT_B du second équipement EQ_B détermine la puissance de réception théorique du troisième message. À cette fin, l'unité de traitement UT_B du second équipement EQ_B peut appliquer la formule [Math. 1] précédente en remplaçant $P_{ém}$ par P3.A, d par D1.A et $P_{réc}$ étant la puissance de réception théorique à déterminer. D'autre part, le second équipement EQ_B peut comparer une telle puissance de réception théorique à la troisième puissance de réception P3.B effectivement mesurée par le second équipement EQ_B lors de la réception du troisième message. Si la puissance de réception théorique est sensiblement égale à la troisième puissance de réception P3.B (à une valeur seuil ε' prédéfinie près par exemple), cela signifie que l'hypothèse admise par le premier équipement EQ_A est a priori validée par le second équipement EQ_B. La comparaison de telles puissances de réception (théorique et réellement mesurée) permet de confirmer ou d'infirmer l'hypothèse de la visibilité directe entre les premier et second équipements EQ_A, EQ_B. En effet, selon une telle hypothèse, l'émission d'un signal à une puissance d'émission donnée (ici P3.A) à destination d'un objet à distance connue (ici considérée comme étant D1.A) permettrait de prédire la puissance de réception (ici la puissance de réception théorique) du signal par cet objet. Une telle étape peut être mise en oeuvre par le second équipement EQ_A en complément des étapes S8 et S9. En variante, le second équipement EQ_B peut, d'une part, déterminer le rapport seuil Rs à l'instar du premier équipement EQ_A comme un rapport entre la troisième puissance d'émission P3.A et la puissance de réception théorique déterminée. Dans un autre mode de réalisation, le second équipement reçoit un tel rapport seuil Rs dans le troisième message. Le second équipement EQ_B peut, d'autre part, calculer un second rapport entre la troisième puissance d'émission P3.A et la troisième puissance de réception P3.B. Le second équipement EQ_B peut alors comparer le rapport seuil Rs au second rapport. Si le second rapport est supérieur au rapport seuil Rs, cela signifie que le troisième message est reçu à une puissance (à savoir P3.B) plus faible que la puissance de réception prédite (à savoir, la puissance de réception théorique) ; cela est notamment dû à la présence possible d'un obstacle physique ayant diminué la puissance du troisième message par réflexion des ondes sur l'obstacle : le second équipement EQ_B détermine notamment que l'hypothèse de vue directe entre le premier équipement et le second équipement EQ_A, EQ_B est incorrecte. L'hypothèse de vue directe est au contraire maintenue si le second rapport est sensiblement égal ou supérieur au rapport seuil Rs.

Dans le premier cas comme dans le second cas, aux étapes disjointes S91 et S92, le second équipement EQ_B émet le quatrième message à une quatrième puissance d'émission P4.B, une telle quatrième puissance d'émission P4.B étant déterminée en corrélation avec la deuxième estimation D1.B de distance par le second équipement EQ_B à l'étape S8. À l'instar de la troisième puissance d'émission P3.A déterminée par le premier équipement EQ_A, la détermination de la quatrième puissance d'émission P4.B peut prendre en compte des caractéristiques liées au signal radiofréquence portant le quatrième message et/ou aux critères relatifs à l'application de proximité. Le quatrième message peut également comprendre, à l'instar des messages précédents, des données relatives aux conditions de réception du troisième message par le second équipement EQ_B. Le quatrième message peut également comprendre, à l'instar des messages précédents, des données relatives à la quatrième puissance d'émission P4.B du quatrième message.

Un tel quatrième message est alors reçu par le premier équipement EQ_A à une étape S93 comme illustré sur les figures 3 et 4, à une quatrième puissance de réception P4.A. Le premier équipement EQ_A reçoit également des données confirmant ou, au contraire, infirmant la première estimation D1.A de distance effectuée par le premier équipement EQ_A.

Ainsi, à l'issue de l'étape S93, le premier équipement EQ_A et le second équipement EQ_B ont effectué un échange aboutissant à la confirmation ou, au contraire, à l'infirmation d'une estimation sensiblement commune d'une distance entre le premier équipement EQ_A et le second équipement EQ_B.

Le premier équipement EQ_A peut alors, à une étape S94 illustrée sur la figure 4, identifier une confirmation de distance ou au contraire une infirmation de distance, faite par le second équipement EQ_B. La phase de validation ou non d'une vue directe entre les premier et second équipements EQ_A, EQ_B est alors terminée. Dans le cas d'une confirmation d'une telle distance, la phase de validation de distance est également terminée à l'issue de l'étape S94 et la phase d'exécution de l'application de proximité entre le premier équipement EQ_A et le second équipement EQ_B peut être mise en oeuvre, à une étape S10.

Dans le cas où la première estimation D1.A de distance par le premier équipement EQ_A est infirmée, à l'étape S94, une nouvelle estimation de la distance est mise en oeuvre du côté du premier équipement EQ_A. Cela signifie par exemple que l'hypothèse de visibilité directe admise par le premier équipement EQ_A pour l'estimation de la première estimation D1.A de distance est invalide (le premier équipement EQ_B a par exemple surestimé la distance séparant les premier et second équipements EQ_A, EQ_B de par la présence de réflexions multiples lors de la propagation du second message). Dans un mode réalisation non représenté par les figures 3 à 5, le procédé de détection peut prendre fin lorsque l'hypothèse d'une visibilité directe entre les premier et second équipements EQ_A, EQ_B est infirmée auprès du premier équipement EQ_A par le second équipement EQ_B, à l'issue de l'étape S93. C'est par exemple le cas si les critères de l'application de proximité requièrent une telle vue directe des équipements (comme dans l'exemple du tableau d'un musée accroché à un mur et un utilisateur est situé derrière un tel mur). Dans la suite du procédé de détection décrit, une phase d'estimation de la distance réelle (en présence ou non d'une vue directe) entre les premier et second équipements EQ_A, EQ_B est mise en oeuvre à l'issue de la phase de validation d'une visibilité directe ou non. Une telle phase de validation de la distance peut rester pertinente, d'autant plus qu'une divergence d'estimation de distance entre les premier et second équipements EQ_A, EQ_B peut être causée par d'autres facteurs qu'une invalidité de l'hypothèse de vue directe.

Les étapes S5, S6, S7, S9, S9, S91, S92 et S93 sont alors réitérées avec les valeurs de puissance d'émission reçue et de puissance de réception mesurée, du dernier message échangé, de sorte que le premier équipement EQ_A et le second équipement EQ_B procèdent respectivement à une ou plusieurs nouvelles étapes d'évaluation et de confirmation (ou d'infirmation) d'une estimation de distance. Les étapes S5, S6, S7, S9, S9, S91, S92 et S93 peuvent être répétées jusqu'à une n-ième itération (n étant un nombre entier supérieur à 1) lorsqu'une n-ième estimation dn.A (ou dn.B) de distance estimée est confirmée comme étant sensiblement commune aux premier et second équipements EQ_A, EQ_B. L'étape S10 d'exécution de l'application de proximité peut alors être mise en oeuvre.

## Revendications

1. Procédé mis en oeuvre par un premier équipement (EQ_A), d'établissement d'une communication radiofréquence avec au moins un second équipement (EQ_B), le procédé comprenant :

   a) une émission d'un premier message à une première puissance d'émission (P1.A), ladite première puissance d'émission (P1.A) étant supérieure à une puissance minimale d'émission cible (P),
   b) une réception d'au moins un second message en provenance au moins du second équipement (EQ_B), ledit second message étant reçu à une deuxième puissance de réception (P2.A) et comprenant une donnée relative à une deuxième puissance d'émission (P2.B) du second équipement (EQ_B),
   c) une émission d'un troisième message à une troisième puissance d'émission (P3.A) à destination du second équipement (EQ_B), ladite troisième puissance d'émission (P3.A) étant déterminée sur la base de la deuxième puissance de réception (P2.A) et de la deuxième puissance d'émission (P2.B).

2. Procédé selon la revendication 1 comprenant en outre :

   une première estimation (D1.A) de la distance entre le premier équipement (EQ_A) et le second équipement (EQ_B) sur la base de la deuxième puissance de réception (P2.A) du second message et de la deuxième puissance d'émission (P2.B),
   et dans lequel la troisième puissance d'émission (P3.A) est en outre déterminée sur la base de la première estimation (D1.A) de distance.

3. Procédé selon la revendication 2, dans lequel le troisième message comprend au moins la première estimation (D1.A) de la distance.

4. Procédé selon l'une des revendications précédentes, dans lequel le troisième message comprend au moins une donnée relative à la troisième puissance d'émission (P3.A).

5. Procédé selon l'une des revendications précédentes, la communication radiofréquence étant établie en vue d'une application de proximité, ladite application de proximité étant **caractérisée par** au moins un critère de proximité entre le premier équipement (EQ-A) et le second équipement (EQ-B),
et dans lequel le troisième message est émis au moins sur la base dudit premier critère de proximité, de la deuxième puissance de réception (P2.A) du second message et de la deuxième puissance d'émission (P2.B).

6. Procédé selon la revendication 5 prise en combinaison avec la revendication 2, ledit critère de proximité correspond à une distance tolérée (D) entre le premier équipement (EQ-A) et le second équipement (EQ-B), et dans lequel le troisième message est émis sur la base d'une comparaison entre la première estimation (D1.A) de la distance et la distance tolérée (D).

7. Procédé selon l'une des revendications précédentes et comprenant en outre :
d) une réception d'un quatrième message en provenance du second équipement (EQ_B), ledit quatrième message étant reçu à une quatrième puissance de réception (P4.A), le quatrième message comprenant au moins une donnée relative à une deuxième estimation (D1.B) de la distance entre le premier équipement (EQ_A) et le second équipement (EQ_B).

8. Procédé selon la revendication 7, dans lequel la donnée relative à la deuxième estimation (D1.B) de la distance comprend un élément ou une combinaison d'éléments parmi :

- une valeur de la deuxième estimation (D1.B) de la distance,
- un écart ($\varepsilon$) entre la première estimation (D1.A) de la distance et la deuxième estimation (D1.B) de la distance, et
- une indication relative à une validité de la première estimation (D1.A) de la distance.

9. Procédé selon l'une des revendications 7 et 8, dans lequel le quatrième message comprend en outre une donnée relative à une quatrième puissance d'émission (P4.B) du second équipement (EQ_B).

10. Procédé selon la revendication 9 prise en combinaison avec la revendication 2, dans lequel les étapes c) et d) sont répétées en remplaçant la deuxième puissance de réception (P2.A) par la quatrième puissance de réception (P4.A) et la deuxième puissance d'émission (P2.B) par la quatrième puissance d'émission (P4.B), si l'écart entre la première estimation (D1.A) de la distance et la deuxième estimation (D1.B) de la distance est supérieur à un seuil ($\varepsilon$) prédéfini.

11. Procédé selon l'une des revendications précédentes, dans lequel la deuxième puissance d'émission (P2.B) du second équipement (EQ_B) est inférieure à la première puissance d'émission (P1.A) du premier équipement (EQ_A).

12. Procédé selon l'une des revendications précédentes, dans lequel le premier message comprend en outre un élément ou une combinaison d'éléments parmi :

- un identifiant du premier équipement (EQ_A),
- des données relatives à une mise en oeuvre d'une application de proximité par le premier équipement (EQ-A).

13. Procédé selon l'une des revendications précédentes, dans lequel le second message comprend en outre un élément ou une combinaison d'éléments parmi :

- des données relatives à des conditions de réception du premier message par le second équipement (EQ_B),
- un identifiant du second équipement (EQ_B),
- des données relatives à une mise en oeuvre d'une application de proximité par le second équipement (EQ_B).

14. Un premier équipement (EQ_A) comprenant au moins :

- une unité mémoire (MEM-A),
- une unité de traitement (UT_A) comprenant au moins un processeur (PROC-A),

le premier équipement (EQ_A) étant adapté pour mettre en oeuvre le procédé selon les revendications 1 à 13.

15. Programme informatique comportant des instructions pour la mise en oeuvre du procédé selon l'une des revendications 1 à 13 lorsque ce programme est exécuté par un processeur (PROC-A).

**Patentansprüche**

1. Verfahren, das von einer ersten Vorrichtung (EQ_A) umgesetzt wird, zur Herstellung einer Hochfrequenzkommunikation mit mindestens einer zweiten Vorrichtung (EQ_B), wobei das Verfahren Folgendes beinhaltet:

   a) Senden einer ersten Nachricht mit einer ersten Sendeleistung (P1.A), wobei die erste Sendeleistung (P1.A) größer als eine minimale Zielsendeleistung (P) ist,
   b) Empfangen mindestens einer zweiten Nachricht von mindestens der zweiten Vorrichtung (EQ_B), wobei die zweite Nachricht mit einer zweiten Empfangsleistung (P2.A) empfangen wird und ein Datenelement bezüglich einer zweiten Sendeleistung (P2.B) der zweiten Vorrichtung (EQ_B) beinhaltet,
   c) Senden einer dritten Nachricht mit einer dritten Sendeleistung (P3.A) an die zweite Vorrichtung (EQ_B), wobei die dritte Sendeleistung (P3.A) auf Basis der zweiten Empfangsleistung (P2.A) und der zweiten Sendeleistung (P2.B) bestimmt wird.

2. Verfahren nach Anspruch 1, das ferner Folgendes beinhaltet:
   eine erste Schätzung (D1.A) der Entfernung zwischen der ersten Vorrichtung (EQ_A) und der zweiten Vorrichtung (EQ_B) auf Basis der zweiten Empfangsleistung (P2.A) der zweiten Nachricht und der zweiten Sendeleistung (P2.B), und wobei die dritte Sendeleistung (P3.A) ferner auf Basis der ersten Entfernungsschätzung (D1.A) bestimmt wird.

3. Verfahren nach Anspruch 2, wobei die dritte Nachricht mindestens die erste Schätzung (D1.A) der Entfernung beinhaltet.

4. Verfahren nach einem der vorhergehenden Ansprüche, wobei die dritte Nachricht mindestens ein Datenelement bezüglich der dritten Sendeleistung (P3.A) beinhaltet.

5. Verfahren nach einem der vorhergehenden Ansprüche, wobei die Hochfrequenzkommunikation im Hinblick auf eine Nahbereichsanwendung hergestellt wird, wobei die Nahbereichsanwendung durch mindestens ein Nahbereichskriterium zwischen der ersten Vorrichtung (EQ-A) und der zweiten Vorrichtung (EQ-B) gekennzeichnet ist, und wobei die dritte Nachricht mindestens auf Basis des ersten Nahbereichskriteriums, der zweiten Empfangsleistung (P2.A) der zweiten Nachricht und der zweiten Sendeleistung (P2.B) gesendet wird.

6. Verfahren nach Anspruch 5 in Kombination mit Anspruch 2, wobei das Nahbereichskriterium einer tolerierten Entfernung (D) zwischen der ersten Vorrichtung (EQ-A) und der zweiten Vorrichtung (EQ-B) entspricht und wobei die dritte Nachricht auf Basis eines Vergleichs zwischen der ersten Schätzung (D1.A) der Entfernung und der tolerierten Entfernung (D) gesendet wird.

7. Verfahren nach einem der vorhergehenden Ansprüche, das ferner Folgendes beinhaltet:
   d) Empfangen einer vierten Nachricht von der zweiten Vorrichtung (EQ_B), wobei die vierte Nachricht mit einer vierten Empfangsleistung (P4.A) empfangen wird, wobei die vierte Nachricht mindestens ein Datenelement bezüglich einer zweiten Schätzung (Dl.B) der Entfernung zwischen der ersten Vorrichtung (EQ_A) und der zweiten Vorrichtung (EQ_B) beinhaltet.

8. Verfahren nach Anspruch 7, wobei das Datenelement bezüglich der zweiten Schätzung (Dl.B) der Entfernung ein Element oder eine Kombination von Elementen von Folgenden beinhaltet:

   - einen Wert der zweiten Schätzung (Dl.B) der Entfernung,
   - eine Abweichung ($\varepsilon$) zwischen der ersten Schätzung (D1.A) der Entfernung und der zweiten Schätzung (Dl.B) der Entfernung und
   - eine Angabe bezüglich einer Validität der ersten Schätzung (D1.A) der Entfernung.

9. Verfahren nach einem der Ansprüche 7 und 8, wobei die vierte Nachricht ferner ein Datenelement bezüglich einer vierten Sendeleistung (P4.B) der zweiten Vorrichtung (EQ_B) beinhaltet.

10. Verfahren nach Anspruch 9 in Kombination mit Anspruch 2, wobei die Schritte c) und d) wiederholt werden und dabei die zweite Empfangsleistung (P2.A) durch die vierte Empfangsleistung (P4.A) und die zweite Sendeleistung (P2B) durch die vierte Sendeleistung (P4.B) ersetzt werden, wenn die Abweichung zwischen der ersten Schätzung (D1.A) der Entfernung und der zweiten Schätzung (Dl.B) der Entfernung größer als eine vordefinierte Schwelle ($\varepsilon$) ist.

**11.** Verfahren nach einem der vorhergehenden Ansprüche, wobei die zweite Sendeleistung (P2.B) der zweiten Vorrichtung (EQ_B) kleiner als die erste Sendeleistung (P1.A) der ersten Vorrichtung (EQ_A) ist.

**12.** Verfahren nach einem der vorhergehenden Ansprüche, wobei die erste Nachricht ferner ein Element oder eine Kombination von Elementen von Folgenden beinhaltet:

- eine Kennung der ersten Vorrichtung (EQ_A),
- Daten bezüglich einer Umsetzung einer Nahbereichsanwendung durch die erste Vorrichtung (EQ-A).

**13.** Verfahren nach einem der vorhergehenden Ansprüche, wobei die zweite Nachricht ferner ein Element oder eine Kombination von Elementen von Folgenden beinhaltet:

- Daten bezüglich Empfangsbedingungen der ersten Nachricht durch die zweite Vorrichtung (EQ_B),
- eine Kennung der zweiten Vorrichtung (EQ_B),
- Daten bezüglich einer Umsetzung einer Nahbereichsanwendung durch die zweite Vorrichtung (EQ_B).

**14.** Erste Vorrichtung (EQ_A), die mindestens Folgendes beinhaltet:

- eine Speichereinheit (MEM-A),
- eine Verarbeitungseinheit (UT_A), die mindestens einen Prozessor (PROC-A) beinhaltet,

wobei die erste Vorrichtung (EQ_A) dazu angepasst ist, das Verfahren nach einem der Ansprüche 1 bis 13 umzusetzen.

**15.** EDV-Programm, das Anweisungen umfasst, die bei der Ausführung dieses Programms durch einen Prozessor (PROC-A) das Verfahren nach einem der Ansprüche 1 bis 13 umsetzen.

**Claims**

**1.** Method, implemented by a first equipment (EQ_A), for establishing radiofrequency communication with at least one second equipment (EQ_B), the method comprising:

a) transmitting a first message at a first transmission power (P1.A), said first transmission power (P1.A) being higher than a minimum target transmission power (P),
b) receiving at least one second message from at least the second equipment (EQ_B), said second message being received at a second reception power (P2.A) and comprising a datum relating to a second transmission power (P2.B) of the second equipment (EQ_B),
c) transmitting a third message at a third transmission power (P3.A) to the second equipment (EQ_B), said third transmission power (P3.A) being determined on the basis of the second reception power (P2.A) and of the second transmission power (P2.B).

**2.** Method according to Claim 1, furthermore comprising:

a first estimation (D1.A) of the distance between the first equipment (EQ_A) and the second equipment (EQ_B) on the basis of the second reception power (P2.A) of the second message and of the second transmission power (P2.B),
and wherein the third transmission power (P3.A) is furthermore determined on the basis of the first distance estimation (D1.A).

**3.** Method according to Claim 2, wherein the third message comprises at least the first estimation (D1.A) of the distance.

**4.** Method according to one of the preceding claims, wherein the third message comprises at least one datum relating to the third transmission power (P3.A).

**5.** Method according to one of the preceding claims, the radiofrequency communication being established with a view to a proximity application, said proximity application being **characterized by** at least one criterion of proximity between the first equipment (EQ_A) and the second equipment (EQ_B),

and wherein the third message is transmitted at least on the basis of said first proximity criterion, of the second reception power (P2.A) of the second message and of the second transmission power (P2.B).

**6.** Method according to Claim 5 taken in combination with Claim 2, wherein said proximity criterion corresponds to a tolerated distance (D) between the first equipment (EQ_A) and the second equipment (EQ_B), and wherein the third message is transmitted on the basis of a comparison between the first estimation (D1.A) of the distance and the tolerated distance (D).

**7.** Method according to one of the preceding claims and furthermore comprising:
d) receiving a fourth message from the second equipment (EQ_B), said fourth message being received at a fourth reception power (P4.A), the fourth message comprising at least one datum relating to a second estimation (DI.B) of the distance between the first equipment (EQ_A) and the second equipment (EQ_B).

**8.** Method according to Claim 7, wherein the datum relating to the second estimation (DI.B) of the distance comprises an element or a combination of elements from among:

- a value of the second estimation (DI.B) of the distance,
- a difference ($\varepsilon$) between the first estimation (D1.A) of the distance and the second estimation (DI.B) of the distance, and
- an indication relating to a validity of the first estimation (D1.A) of the distance.

**9.** Method according to either of Claims 7 and 8, wherein the fourth message furthermore comprises a datum relating to a fourth transmission power (P4.B) of the second equipment (EQ_B).

**10.** Method according to Claim 9 taken in combination with Claim 2, wherein steps c) and d) are repeated while replacing the second reception power (P2.A) with the fourth reception power (P4.A) and the second transmission power (P2.B) with the fourth transmission power (P4.B), if the difference between the first estimation (D1.A) of the distance and the second estimation (DI.B) of the distance is greater than a predefined threshold ($\varepsilon$).

**11.** Method according to one of the preceding claims, wherein the second transmission power (P2.B) of the second equipment (EQ_B) is lower than the first transmission power (P1.A) of the first equipment (EQ_A).

**12.** Method according to one of the preceding claims, wherein the first message furthermore comprises an element or a combination of elements from among:

- an identifier of the first equipment (EQ_A),
- data relating to an implementation of a proximity application by the first equipment (EQ_A).

**13.** Method according to one of the preceding claims, wherein the second message furthermore comprises an element or a combination of elements from among:

- data relating to conditions of receipt of the first message by the second equipment (EQ_B),
- an identifier of the second equipment (EQ_B),
- data relating to an implementation of a proximity application by the second equipment (EQ_B).

**14.** First equipment (EQ_A) comprising at least:

- a memory unit (MEM_A),
- a processing unit (UT_A) comprising at least one processor (PROC_A),

the first equipment (EQ_A) being designed to implement the method according to Claims 1 to 13.

**15.** Computer program comprising instructions for implementing the method according to one of Claims 1 to 13 when this program is executed by a processor (PROC_A).

EQ_B

FIG. 1

EQ_A

EQ_C

D

EQ_D

UT_A

EQ_A

PROC-A

MEM-A

COM-A

FIG. 2

FIG. 3

S1 — MSGT1 P1.A

S4 — MSGR2 P2.A

S5 — ESTM D1.A

S6 — MSGT3 P3.A/D1.A

S93 — MSGR4 P4.A/D1.B

S94 — D1.A = D1.B ?   KO

OK

S10 — EXE APP PROX

# FIG. 4

S2 — MSGR1 P1.B

S3 — MSGT2 P2.B

S7 — MSGR3 P3.B/D1.A

S8 — ESTM D1.B

S92 — MSGT4 P4.B/D1.B

S9 — D1.A = D1.B ?

KO

OK

S91 — MSGT4 OK/D1.B

S10 — EXE APP PROX

FIG. 5

**RÉFÉRENCES CITÉES DANS LA DESCRIPTION**

**Documents brevets cités dans la description**

- WO 2015119655 A